# EUROPEAN PATENT APPLICATION

(11) **EP 1 499 142 A2**
(43) Date of publication of application: **19.01.2005**
(21) Application number: 04005487.6
(22) Date of filing: 08.03.2004
(51) Int. Cl.: H04Q 7/32

(54) **Communication terminal apparatus**

(30) Priority: 16.07.2003 JP 2003197856
(71) Applicant: Kabushiki Kaisha Toshiba, Minato-ku, Tokyo 105 (JP)
(72) Inventor: Iimori, Eiji, Toshiba Corporation, Minato-ku Tokyo 105-8001 (JP)
(74) Representative: HOFFMANN - EITLE

(57) **Abstract**

In the present invention, an alternate base station is switched to a serving base station if second information received by receiving means (20) under control of first control means (100a) corresponds to second information stored in storing means (90).
The receiving means (20) is controlled to receive first information from the serving bas station if communication with the serving base station needs to be made. Storing of the first information is controlled while making the first information correspond to identification information of the serving base station.

## Description

This invention relates to a communication terminal apparatus in a radio communication system such as a mobile telephone system.

In a wideband code division multiple access (W-CDMA) system which is one of mobile telephone systems, generation of an incoming call is monitored in the intermittent reception scheme.

At the monitoring time, the intermittent reception scheme operates the communication function during a period when a paging signal notify presence or absence of an incoming call is transmitted intermittently from a base station (ready state), and operates an operating section, a display section and their related portions during other periods (sleep state).

If an incoming call is detected from the paging signal in the ready state, the intermittent reception is stopped, the communication function is continuously operated to make communication. If the incoming call is not detected, a timer is reset, a power supply of each section is turned off, and the sleep state is maintained again until the paging signal is transmitted.

Thus, the consumed power can be reduced at the incoming call standby time by employing the intermittent reception scheme.

Incidentally, when the ready state is set again from the sleep state, synchronization is to be made with a base station which has received signals in the previous ready state. However, if the receiving level from the base station is low, cell search or what is called reselection is executed to search for the other base station suitable for the communication.

For example, in the W-CDMA system based on 3rd Generation Partnership Project (3GPP), inherent system information (BCCH) notified from a newly detected base station is acquired when the reselection is executed. After that, intermittent reception is executed on the basis of the BCCH.

However, the BCCH provides the newly detected base station with a large amount of information and the reception of the information requires a receiving speed of about 1000 to 2000 milliseconds. For this reason, much power is consumed for the reception of the BCCH. If the reselection is frequently executed, battery power may be wasted.

The present invention has been accomplished to solve the above-described problem. The object of the present invention is to provide a communication terminal apparatus capable of reducing power consumption during intermittent reception.

According to an aspect of the present invention, there is provided a communication terminal apparatus for making communication with a base station connectable with a communication network. The apparatus comprises receiving means (20) for receiving a signal transmitted from the base station, storing means (90) for storing first information and second information which are received from the base station by the receiving means (20), while making the first information and second information correspond to identification information of the base station, first control means (100a) for controlling the receiving means (20) in accordance with the first information to receive a signal transmitted from a serving base station configured to transmit a paging signal to the apparatus, if a preset time has passed, level detecting means (30) for detecting a level of the signal received by the receiving means (20) under control of the first control means (100a), second control means (100a) for controlling the receiving means (20) to stop the operation of the receiving means (20) if the level detected by the level detecting means (30) is equal to or higher than a threshold value, base station detecting means (100a) for detecting an alternate base station suitable for the reception other than the serving base station by controlling the receiving means (20) if the level detected by the level detecting means (30) is lower than a threshold value, third control means (100a) for controlling the receiving means (20) to receive second information from the alternate base station if information received from the alternate base station stored in the storing means (90), fourth control means (100a) for controlling the receiving means (20) to receive the first information from the alternate base station if the second information received by the receiving means (20) under control of the third control means (100a) does not correspond to the second information stored in the storing means (90), first storing controlling means (100a) for controlling storing of the first information received by the receiving means (20) under control of the fourth control means (100a), in the storing means (90), while making the first information correspond to identification information of the alternate base station, base station switching means for switching the alternate base station to the serving base station if the second information received by the receiving means (20) under control of the third control means (100a) corresponds to the second information stored in the storing information (90), fifth control means (100a) for controlling the receiving means (20) to receive the first information from the serving base station if there is a necessity to make communication with the serving base station, and second storing controlling means (100a) for controlling storing of the first information received by the receiving means (20) under control of the fifth control means (100a), in the storing means (90), while making the first information correspond to identification information of the serving base station.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram of a communication terminal apparatus according to an embodiment of the present invention;
FIG. 2 is a flowchart of operations at intermittent reception in the communication terminal apparatus shown in FIG. 1;
FIG. 3 is a flowchart of reselection in the intermittent reception shown in FIG. 2;
FIG. 4 is a flowchart of communication control in the intermittent reception shown in FIG. 2;
FIG. 5 is an illustration of executing the intermittent reception by the communication terminal apparatus shown in FIG. 1 while moving;
FIG. 6 is an illustration of executing the intermittent reception by the communication terminal apparatus shown in FIG. 1 while moving; and
FIG. 7 is an illustration of executing the intermittent reception by the communication terminal apparatus shown in FIG. 1 while moving.

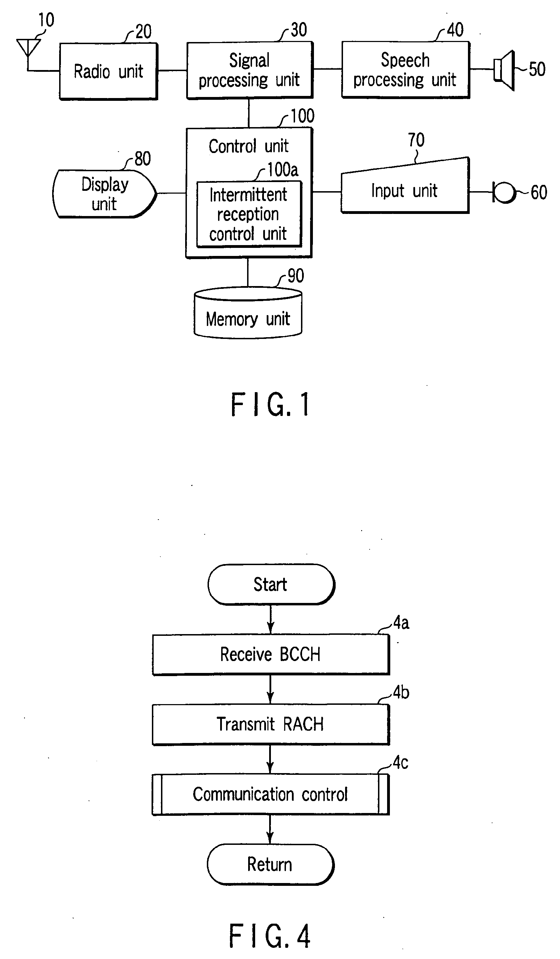

FIG. 1 is a block diagram of a communication terminal apparatus according to an embodiment of the present invention. A W-CDMA mobile communication terminal is explained in the following descriptions.

A radio unit 20 makes radio communication in the W-CDMA scheme with a base station (not shown) via an antenna 10. The radio unit 20 down-converts a radio signal received from the base station to obtain a spread baseband signal.

A signal processing unit 30 despreads the baseband signal to obtain information indispensable for the communication with the base station and data to be transmitted to the mobile communication terminal. The signal processing unit 30 also has a function of detecting a receiving signal level for each base station on the basis of the baseband signal and notifies the detected level to a control unit 100.

A speech processing unit 40 decodes the data obtained by the signal processing unit 30 to reproduce a speech signal. The speech signal is output from a speaker 50. The speech processing unit 40 also encodes speech input from a microphone 60 as speech data, which is output to the signal processing unit 30.

The signal processing unit 30 executes a spreading operation by using the speech data to generate a modulation signal. The radio unit 20 up-converts the modulation signal into a radio signal, which is transmitted to the base station via the antenna 10.

An input unit 70 is composed of a plurality of keys and accepts various instructions from a user. The accepted information is output to the control unit 100. A display unit 80 is a liquid crystal display (LCD) or the like which visually display the information. The display unit 80 is controlled by the control unit 100.

A memory unit 90 is a unit using a semiconductor such as a RAM or ROM. The memory unit 90 stores the control program and control data of the control unit 100, and user data such as telephone directory data and mail data.

The memory unit 90 has a cache area in which system information (BCCH) received from the base station is stored in association with identification information of the base station and the receiving level. The information about number m of base stations is also stored in the cache area.

The control unit 100 configured to wholly control the units of the mobile communication terminal controls the radio unit 20 and the signal processing unit 30 to implement the W-CDMA radio communication. In addition, the control unit 100 controls incoming and outgoing calls in accordance with the instructions from the input unit 70, and controls the display unit 80 to display generation of incoming and outgoing calls, conditions of the mobile communication terminal, information stored in the memory unit 90 and the like.

The control unit 100 comprises an intermittent reception control unit 100a. The control unit 100a controls the radio unit 20, the signal processing unit 30 and the like to make them execute intermittent operations at the standby time. Power consumption of a battery (not shown) can be thereby reduced.

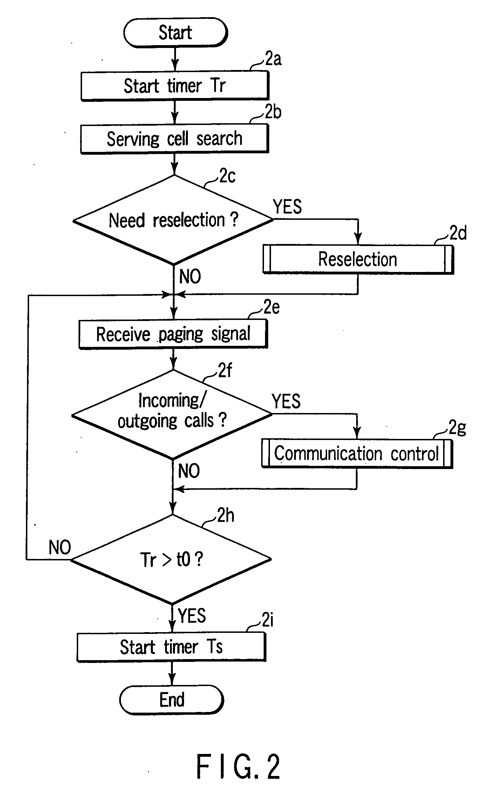

Next, operations of the mobile communication terminal having the above-described structure will be explained. FIGS. 2 to 4 are flowcharts of the operations of the mobile communication terminal, which are controlled by the control unit 100a. The processing of FIG. 2 is started when a sleep state of the mobile communication terminal is switched to a ready state.

First, in step 2a, the control unit 100a starts a timer Tr. The operation proceeds to step 2b.

In step 2b, the control unit 100a starts the radio unit 20 and the signal processing unit 30 to execute the serving cell search and receive a radio signal from a base station in a serving cell (hereinafter referred to as a serving base station). The operation proceeds to step 2c. The serving cell indicates a cell including the base station which has made communication in the previous ready state.

In step 2c, the control unit 100a compares a level of the signal received in step 2b with a threshold value and determines whether a reselection processing is needed. If the level of the signal received in step 2b is lower than the threshold value and the reselection is needed, the operation proceeds to step 2d. If the reselection is not needed, the operation proceeds to step 2e.

In step 2d, the control unit 100a executes the reselection. The operation proceeds to step 2e. Details of the reselection will be described later.

In step 2e, the control unit 100a receives, of the signal transmitted from the serving base station, a paging signal inserted into a slot assigned to the mobile communication terminal. The operation proceeds to step 2f.

In step 2f, the control unit 100a determines whether an incoming call is generated, on the basis of the paging signal received in step 2e. The control unit 100a also determines whether an outgoing call request is made via the input unit 70 by a user and whether a position registration processing (registration) needs to be executed via the serving base station. If a result of either of the determinations is "positive", the operation proceeds to step 2g. If the results of both the determinations are "negative", the operation proceeds to step 2h.

In step 2g, the control unit 100a executes any of the communication controls such as the control of notifying the generated incoming call, the outgoing call control and the position registration. The operation proceeds to step 2h. Details of the processing in this step will be described later.

In step 2h, the control unit 100a determines whether the count value of the timer Tr started in step 2a exceeds a threshold value t0. If the count value of the timer Tr exceeds the threshold value t0, the operation proceeds to step 2i. If the count value of the timer Tr does not exceed the threshold value t0, the operation returns to step 2e.

In step 2i, the control unit 100a stops the timer Tr and starts a timer Ts to stop power supply to the radio unit 20 and the signal processing unit 30. The apparatus thereby becomes in the sleep state.

After that, if the timer Ts reaches a threshold value T1, the processing of FIG. 2 is started again. The threshold value T1 is set by the control unit 100a on the basis of the timing at which the paging signal is transmitted from the base station to the apparatus.

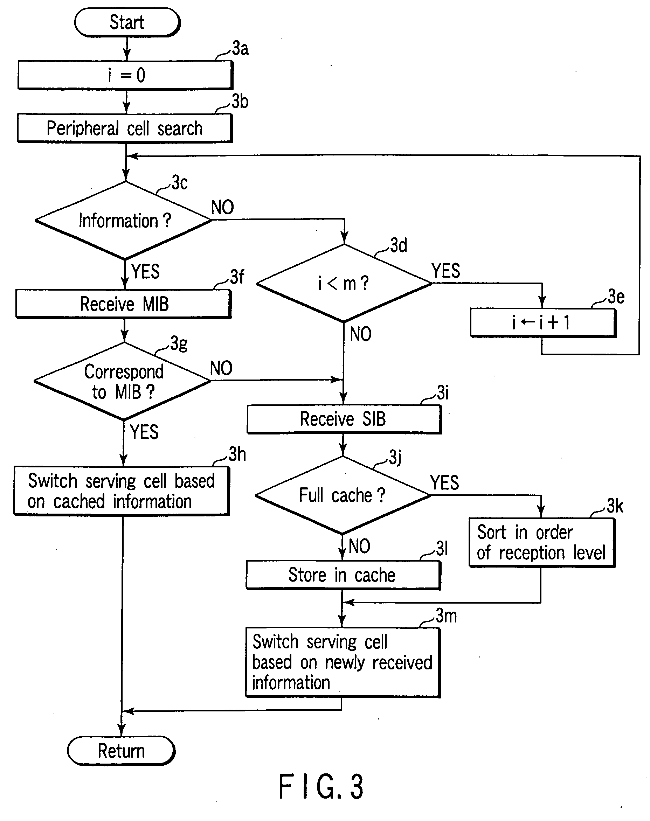

Next, the reselection in step 2d will be explained with reference to FIG. 3. This processing is also executed by the control unit 100a.

In step 3a, the control unit 100a sets "0" at parameter i. The operation proceeds to step 3b.

In step 3b, the control unit 100a executes peripheral cell search. The peripheral cell search is to receive signals transmitted from base stations in cells near the serving cell, detect the cell from which the signals can be received preferably, detect identification information of the cell and detect the power level and the quality level of the received signals. The operation proceeds to step 3c.

In step 3c, the control unit 100a determines whether the identification information detected in step 3b corresponds to i-th information item stored in the cache area of the memory unit 90. If the identification information corresponds to the i-th information item, the operation proceeds to step 3f. If the identification information does not correspond to the i-th information item, the operation proceeds to step 3d.

In step 3d, the control unit 100a determines whether number i is smaller than number m. If number i is smaller than number m, the operation proceeds to step 3e. If number i is equal to or greater than number m, the operation proceeds to step 3i.

In step 3e, the control unit 100a adds "1" to number i. The operation returns to step 3c.

In step 3f, the control unit 100a controls the signal processing unit 30 and receives MIB. The operation returns to step 3g. MIB indicates one of information items included in the BCCH. The BCCH is composed of MIB and SIB.

In step 3g, the control unit 100a determines whether the MIB received in step 3f corresponds to the MIB included in the i-th information item stored in the cache area of the memory unit 90. If both of MIB correspond to each other, the operation returns to step 3h. If they do not correspond to each other, the operation returns to step 3i. The correspondence of MIB is determined by comparing tags added to them.

In step 3h, the control unit 100a switches the cell to be handed as the serving cell to the cell corresponding to the i-th information item stored in the cache area of the memory unit 90 and ends the processing. The operation returns to step 2e.

In step 3i, the control unit 100a controls the signal processing unit 30 to receive the SIB. The operation proceeds to step 3j.

In step 3j, the control unit 100a determines whether the cache area of the memory unit 90 is full. If the cache area is full, the operation proceeds to step 3k. If the cache area includes free space, the operation proceeds to step 31.

In step 3k, the control unit 100a detects higher-order number m of information of the reception level, on the basis of the reception level detected in step 3b and the reception level corresponding to the information which has already been stored in the cache area of the memory unit 90. The control unit 100a also stores the detected information in the cache area of the memory unit 90. Then the operation proceeds to step 3m. If the reception level detected in step 3b is included in higher-order number m of information, the identification information of the cell detected in step 3b, and the power level and quality level of the received signal are made to correspond to the reception level and stored in the cache.

In step 31, the control unit 100a makes the identification information of the cell detected in step 3b, and the power level and quality level of the received signal correspond to the reception level and stores them in the cache. The operation proceeds to step 3m.

In step 3m, the control unit 100a switches the cell to be handled as the serving cell to the cell detected in step 3b and ends the processing. The operation returns to step 2e.

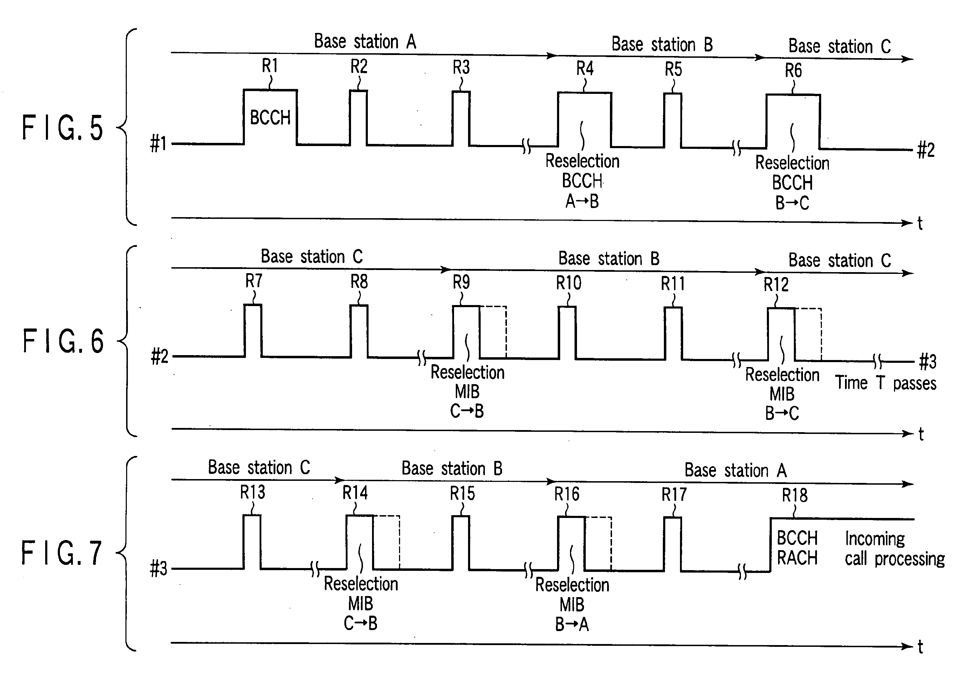

Next, the communication control of step 2g will be explained with reference to FIG. 4. This processing is executed by the control unit 100a.

In step 4a, the control unit 100a controls the signal processing unit 30 to receive BCCH, i.e. MIB and SIB. The operation proceeds to step 4b.

In step 4b, the control unit 100a controls the radio unit 20 and the signal processing unit 30 to transmit RACH of the power level based on the SIB received in step 4a. The operation proceeds to step 4c. RACH includes the information about the mobile communication terminal which is indispensable for the communication to be made in step 4c.

In step 4c, the control unit 100a executes any of communication controls such as control of notifying a generated incoming call, control of an outgoing call, and the position registration processing.
The operation proceeds to step 2h.

Next, the intermittent reception of the control unit 100a in a case where the mobile communication terminal moves across radio zones of base stations A, B and C which belong to different cells, will be explained. The control unit 100a moves through the radio zones of the base stations in order of base stations A, B, C, B, C, B, and A. An incoming call is generated in the radio zone of the base station A. FIGS. 5 to 7 show the intermittent reception operations of the radio unit 20 and the signal processing unit 30 in this case.

First, the mobile communication terminal, in the radio zone of base station A, detects base station A as the serving base station and receives BCCH from base station A as represented by R1 of FIG. 5. As the BCCH received from base station A is not stored in the cache area of the memory unit 90, the BCCH is stored therein (R1). After that, the intermittent reception is executed while base station A having preferable reception quality serves as the serving base station, as represented by R2 and R3.

The terminal moves from the radio zone of base station A to the radio zone of base station B.
As the signal level received from base station A is lowered, the reselection is executed as represented by R4. On the basis of the reselection, the terminal receives the BCCH from base station B and switches base station A to base station B as the serving base station.

As the BCCH received from base station B is not stored in the cache area of the memory unit 90, the BCCH is stored therein. After that, the intermittent reception is executed while base station B having preferable reception quality serves as the serving base station, as represented by R5.

The terminal moves from the radio zone of base station B to the radio zone of base station C. As the signal level received from base station B is lowered, the reselection is executed as represented by R6. On the basis of the reselection, the terminal receives the BCCH from base station C and switches base station B to base station C as the serving base station.

As the BCCH received from base station C is not stored in the cache area of the memory unit 90, the BCCH is stored therein. After that, the intermittent reception is executed while base station C having preferable reception quality serves as the serving base station, as represented by R7 and R8.

After that, the terminal moves again from the radio zone of base station C to the radio zone of base station B. As the signal level received from base station C is lowered, the reselection is executed as represented by R9. On the basis of the reselection, the terminal receives the MIB only from base station B as the BCCH of base station B has been stored in the cache area of the memory unit 90.

If the terminal confirms that the MIB received from base station B is not different from the MIB stored in the cache, the terminal switches base station C to base station B as the serving base station without receiving the SIB. After that, the terminal executes the intermittent reception while base station B having preferable reception quality serves as the serving base station, as represented by R10 and R11.

The terminal moves again from the radio zone of base station B to the radio zone of base station C. As the signal level received from base station B is lowered, the reselection is executed as represented by R12. On the basis of the reselection, the terminal receives the MIB only from base station C as the BCCH of base station C has been stored in the cache area of the memory unit 90.

If the terminal confirms that the MIB received from base station C is not different from the MIB stored in the cache, the terminal switches base station B to base station C as the serving base station without receiving the SIB. After that, the terminal executes the intermittent reception while base station C having preferable reception quality serves as the serving base station, as represented by R13.

After passing time T in the radio zone of base station C, the terminal moves from the radio zone of base station C to the radio zone of base station B. As the signal level received from base station C is lowered, the reselection is executed as represented by R14. On the basis of the reselection, the terminal receives the MIB only from base station B as the BCCH of base station B has been stored in the cache area of the memory unit 90.

If the terminal confirms that the MIB received from base station B is not different from the MIB stored in the cache, the terminal switches base station C to base station B as the serving base station without receiving the SIB. After that, the terminal executes the intermittent reception while base station B having preferable reception quality serves as the serving base station, as represented by R15.

The terminal moves again from the radio zone of base station B to the radio zone of base station A. As the signal level received from base station B is lowered, the reselection is executed as represented by R16. On the basis of the reselection, the terminal receives the MIB only from base station B as the BCCH of base station A has been stored in the cache area of the memory unit 90 though much time has passed.

If the terminal confirms that the MIB received from base station A is not different from the MIB stored in the cache, the terminal switches base station B to base station A as the serving base station without receiving the SIB. After that, the terminal executes the intermittent reception while base station B having preferable reception quality serves as the serving base station, as represented by R17.

After that, if the terminal receives notification of the incoming call from the paging signal received from base station A, the terminal receives the BCCH from base station A, as represented by R18. In addition, the terminal transmits the RACH at the power level based on the BCCH and executes the incoming call processing.

In the reselection, as described above, the terminal having the above-described structure determines whether the BCCH stored in the cache area is new information or old information on the basis of the received MIB. If the MIB is the latest information, the terminal switches the serving base station on the basis of the BCCH stored in the cache area as represented by R9 and R12 in FIG. 6.

Even if a certain time has passed since storing the BCCH in the cache area, the terminal executes the reselection. The terminal determines whether the BCCH stored in the cache area is new information or old information on the basis of the received MIB. If the MIB is the latest information, the terminal switches the serving base station on the basis of the BCCH stored in the cache area as represented by R14 and R16 in FIG. 7.

In addition, the terminal receives the BCCH from the serving base station and executes any of communication controls such as control of notifying the generated incoming call, the outgoing call control and position registration, on the basis of the BCCH, as represented by R18 of FIG. 7.

Thus, in the terminal having the above-described structure, the serving base station is switched on the basis of the BCCH stored in the cache area unless the MIB received from the serving base station is changed. For this reason, the BCCH does not need to be frequently received in the reselection and the consumption of the battery power can be thereby reduced.

## Claims

1. A communication terminal apparatus for making communication with a base station connectable with a communication network, the apparatus **characterized by** comprising:
receiving means (20) for receiving a signal transmitted from the base station;
storing means (90) for storing first information and second information which are received from the base station by the receiving means (20), while making the first information and second information correspond to identification information of the base station;
first control means (100a) for controlling the receiving means (20) in accordance with the first information to receive a signal transmitted from a serving base station configured to transmit to the apparatus a paging signal capable of including information notifying an incoming call, if a preset time has passed;
level detecting means (30) for detecting a level of the signal received by the receiving means (20) under control of the first control means (100a);
second control means (100a) for controlling the receiving means (20) to stop the operation of the receiving means (20) if the level detected by the level detecting means (30) is equal to or higher than a threshold value;
base station detecting means (100a) for detecting an alternate base station suitable for the reception other than the serving base station by controlling the receiving means (20) if the level detected by the level detecting means (30) is lower than a threshold value;
third control means (100a) for controlling the receiving means (20) to receive second information from the alternate base station if information received from the alternate base station stored in the storing means (90);
fourth control means (100a) for controlling the receiving means (20) to receive the first information from the alternate base station if the second information received by the receiving means (20) under control of the third control means (100a) does not correspond to the second information stored in the storing means (90);
first storing controlling means (100a) for controlling storing of the first information received by the receiving means (20) under control of the fourth control means (100a), in the storing means (90), while making the first information correspond to identification information of the alternate base station;
base station switching means for switching the alternate base station to the serving base station if the second information received by the receiving means (20) under control of the third control means (100a) corresponds to the second information stored in the storing information (90);
fifth control means (100a) for controlling the receiving means (20) to receive the first information from the serving base station if there is a necessity to make communication with the serving base station; and
second storing controlling means (100a) for controlling storing of the first information received by the receiving means (20) under control of the fifth control means (100a), in the storing means (90), while making the first information correspond to identification information of the serving base station.

2. The apparatus according to claim 1,
**characterized by** further comprising sixth control means (100a) for controlling the receiving means (20) to receive the paging signal from the serving base station,
wherein if the information notifying an incoming call is included in the paging signal received by the receiving means (20) under control of the sixth control means (100a), the fifth control means (100a) controls the receiving means (20) to receive the first information from the serving base station.

3. The apparatus according to claim 1,
**characterized by** further comprising accepting means (70) for accepting an outgoing call request from the user,
wherein if the accepting means (70) accepts the outgoing call request, the fifth control means (100a) controls the receiving means (20) to receive the first information from the serving base station.

4. The apparatus according to claim 1,
**characterized in that** if position registration needs to be made, the fifth control means (100a) controls the receiving means (20) to receive the first information from the serving base station.

5. A communication terminal apparatus for making communication with a base station connectable with a communication network and executing intermittent reception at a standby time, the apparatus
**characterized by** comprising:
receiving means (20) for receiving a signal transmitted from the base station;
storing means (90) for storing first information and second information received from the base station by the receiving means (20), while making the first information and the second information correspond to identification information of the base station;
base station detecting means (100a) for detecting an alternate base station suitable for the reception other than a serving base station configured to transmit to the apparatus a paging signal capable of including information notifying an incoming call, by controlling the receiving means (20);
first control means (100a) for controlling the receiving means (20) to receive second information from the alternate base station if information received from the alternate base station is stored in the storing means (90);
second control means (100a) for controlling the receiving means (20) to receive first information from the alternate base station if the second information received by the receiving means (20) under control of the first control means (100a) does not correspond to the second information stored in the storing means (90);
first storing controlling means (100a) for controlling storing of the first information received by the receiving means (20) under control of the second control means (100a), in the storing means (90), while making the first information correspond to identification information of the alternate base station;
base station switching means (100a) for switching the alternate base station to the serving base station if the second information received by the receiving means (20) under control of the second control means (100a) corresponds to the second information stored in the storing means (90);
third control means (100a) for controlling the receiving means (20) to receive the first information from the serving base station if there is a necessity to make communication with the serving base station; and
second storing controlling means (100a) for controlling storing of the first information received by the receiving means (20) under control of the second control means (100a), in the storing means (90), while making the first information correspond to identification information of the serving base station.

6. The apparatus according to claim 5,
**characterized by** further comprising:
fourth control means (100a) for controlling the receiving means (20) in accordance with the first information to receive a signal transmitted from the serving base station; and
level detecting means (30) for detecting a level of the signal received by the receiving means (20) under control of the fourth control means (100a),
wherein if the level detected by the level detecting means (30) is lower than a preset threshold value, the apparatus controls the receiving means (20) to detect the alternate base station suitable for communication other than the serving base station.

7. The apparatus according to claim 6,
**characterized by** further comprising fifth control means (100a) for controlling the receiving means (20) to stop an operation of the receiving means (20) if the level detected by the level detecting means (30) is equal to or higher than the threshold value.

8. The apparatus according to claim 5,
**characterized by** further comprising sixth control means (100a) for controlling the receiving means (20) to receive the paging signal from the serving base station,
wherein if the information notifying an incoming call is included in the paging signal received by the receiving means (20) under control of the sixth control means (100a), the third control means (100a) controls the receiving means (20) to receive the first information from the serving base station.

9. The apparatus according to claim 5,
**characterized by** further comprising accepting means (70) for accepting an outgoing call request from a user,
wherein if the accepting means (70) accepts the outgoing call request, the third control means (100a) controls the receiving means (20) to receive the first information from the serving base station.

10. The apparatus according to claim 5,
**characterized in that** if position registration needs to be made, the third control means (100a) controls the receiving means (20) to receive the first information from the serving base station.
